## Europäisches Patentamt
## European Patent Office
## Office européen des brevets

(11) Veröffentlichungsnummer: **0 178 679**
**A2**

(12) # EUROPÄISCHE PATENTANMELDUNG

(21) Anmeldenummer: **85113242.3**

(22) Anmeldetag: **18.10.85**

(51) Int. Cl.⁴: **D 04 H 1/54**

(30) Priorität: **19.10.84 DE 8430802 U**
**20.12.84 DE 8437227 U**

(43) Veröffentlichungstag der Anmeldung:
**23.04.86 Patentblatt 86/17**

(84) Benannte Vertragsstaaten:
**AT BE CH DE FR GB IT LI NL**

(71) Anmelder: **Grünzweig + Hartmann und Glasfaser AG**
**Bürgermeister-Grünzweig-Strasse 1-47**
**D-6700 Ludwigshafen am Rhein(DE)**

(72) Erfinder: **Kummermehr, Hans**
**Prinzregentenstrasse 25a**
**D-6700 Ludwigshafen(DE)**

(74) Vertreter: **KUHNEN & WACKER Patentanwaltsbüro**
**Schneggstrasse 3-5 Postfach 1729**
**D-8050 Freising(DE)**

(54) **Verfahren zur Herstellung einer vorzugsweise völlig bindemittelfreien Mineralfasermatte sowie so hergestellte Mineralfasermatte und Vorrichtung zur Durchführung des Verfahrens.**

(57) Zur Heftung einer insbesondere bindemittelfreien Mineralfasermatte (7) werden Heftpunkte dadurch erzeugt, daß die Fasern (3) in ihrer gegenseitigen Lage im Heftbereich durch gegenseitige Verschweißung oder Verklebung fixiert werden. Eine Verschweißung kann mittels Laserstrahlen, Heißluftstrahlen oder Flammstrahlen erfolgen. Bei einer Verklebung werden Heftpunkte in Form von Stiften (6) dadurch erzeugt, daß ein fließfähiger, verfestigbarer Stoff in Form eines kompakten feinen Strahles in die niedergedrückte Wollebahn (1) eingeschossen und in der eingeschossenen Stellung verfestigt wird. Hierdurch werden die Enden der Fasern (3) im ausgehärteten Material des Stiftes (6) verklebt und so in der kompaktierten Stellung lagegesichert. Es ergibt sich ein matratzenartiges Aussehen der Mineralfasermatte (7). Bei Bedarf kann das Material zur Bildung des Stiftes (6) anorganisch auf der Basis von Wasserglas oder Kieselsol sein. Auf diese Weise können mit hoher Geschwindigkeit Heftpunkte im Zuge der Produktion der Wollebahn (1) erzeugt werden, und so ohne Verlust an Produktionsgeschwindigkeit eine an insbesondere organischem Bindemittel freie Mineralfasermatte (7) geschaffen werden. Bei Bedarf kann in den Stiften (6) zusätzlich ein Heftfaden (8) verankert werden, der mit eingeschossen wird.

Fig. 5

Verfahren zur Herstellung einer vorzugsweise völlig bindemittelfreien Mineralfasermatte sowie so hergestellte Mineralfasermatte und Vorrichtung zur Durchführung des Verfahrens

Die Erfindung betrifft ein Verfahren zur Herstellung einer vorzugsweise völlig bindemittelfreien Mineralfasermatte, nach dem Oberbegriff des Anspruchs 1, sowie eine so hergestellte Matte nach dem Oberbegriff des Anspruchs 25 und eine zur Durchführung des Verfahrens besonders geeignete Vorrichtung nach dem Oberbegriff des Anspruchs 33.

Mineralfasermatten oder -filze werden in der Regel dadurch hergestellt, daß aus einem Zerfaserungsaggregat herabfallende Fasern auf einer Unterlage wie einem Produktionsband zur Bildung einer Wollebahn einer bestimmten Dicke abgelegt werden. Zur üblichen Herstellung von Mineralfaserfilzen werden die Fasern in der Regel bereits im Fallschacht unterhalb des Zerfaserungsaggregats mit einem Bindemittel wie Phenolharz eingesprüht, und wird das Bindemittel, das relativ homogen in der Wollebahn verteilt ist, in einem Tunnelofen ausgehärtet, den die Wollebahn anschließend durchläuft, wobei zugleich etwa zwischen Walzen eine Pressung der Wollebahn auf eine gewünschte gleichmäßige Dicke erfolgt. Unter "Bindemittel" im vorliegenden Zusammenhang ist ausschließlich ein solches, auf den einzelnen Fasern in relativ homogener Verteilung angeordnetes Bindemittel zu verstehen, welches die Materialeigenschaften und Konsistenz der Mineralfaserbahn in einer gewünschten Weise beeinflußt.

Wenn für die vorgesehene Anwendung der Mineralfaserbahn ein geringerer Bindemittelgehalt oder vollständige Bindemittelfreiheit gewünscht werden, so wird eine verminderte Bindemittelmenge oder gar kein Bindemittel zugegeben, und wird die Wollebahn anschließend, in der Regel noch auf dem Produktionsband, in ihrem Zusammenhalt durch eine Vielzahl diskreter Heftpunkte gesichert, und so eine Mineralfasermatte gebildet. Zur Erzielung einer solchen Heftung ist es bekannt, die Wollebahn zu vernadeln (DE-OS 29 40 425) oder zu versteppen bzw. zu vernähen (DD-PS 20 10 375). Auf diese Weise können bei Bedarf bindemittelfreie Mineralfasermatten hergestellt werden, die trotz Bindemittelfreiheit ausreichenden inneren Zusammenhalt und Formstabilität sowie Festigkeit besitzen, wobei unter Mineralfasern im vorliegenden Zusammenhang generell anorganische Fasern wie Glasfasern, Steinfasern, Keramikfasern usw. zu verstehen sind.

Zwar können durch Versteppen oder Vernadeln bindemittelfreie oder zumindest bindemittelarme Mineralfasermatten der gewünschten Eigenschaften erzielt werden, jedoch erfordern die dazu notwendigen Maschinen bei einer Serienfertigung hohen apparativen Aufwand und sind insbesondere in ihrer Arbeitsgeschwindigkeit infolge der relativ großen bewegten Massen begrenzt. Eine solche Begrenzung der Arbeitsgeschwindigkeit wirkt sich insbesondere dann aus, wenn, wie üblich, die Heftung und Verfestigung der Wollebahn unmittelbar im Zuge der Produktion erfolgen soll, da dann die Laufgeschwindigkeit des Produktionsbandes auch bei vergleichsweise dünner Wolle und damit schnelllaufendem Produktionsband durch die Nadel- oder Steppanlage begrenzt ist. Dies kann dazu führen, daß das Produktionsband tatsächlich nur mit etwa der Hälfte derjenigen Geschwindigkeit laufen kann, mit der sonst produziert werden kann. Hinzu kommt eine mechanische Störanfälligkeit derartiger Maschinen durch Nadelbrüche und Verschleiß, die zu erheblichen Produktionsausfällen führen kann.

Demgegenüber liegt der Erfindung die Aufgabe zugrunde, ein Verfahren der im Oberbegriff des Anspruchs 1 angegebenen Gattung zu schaffen, mit dem eine solche Heftung einer bindemittelarmen oder bindemittelfreien Mineralfasermatte bei geringer Störanfälligkeit mit hoher Geschwindigkeit durchgeführt werden kann.

Die Lösung dieser Aufgabe erfolgt durch die kennzeichnenden Merkmale des Anspruchs 1.

Durch die gegenseitige Lagefixierung der einzelnen Fasern im Bereich eines Heftpunktes mittels Verschweißung oder Verklebung können mechanische Haltemittel wie Fäden samt ihrer relativ komplizierten Verankerung durch Stepp- oder Nähvorgänge entfallen. Damit ist keine zeitraubende und störanfällige Einbringung solcher mechanischer Haltemittel in das Fasermaterial der Mineralfasermatte mehr erforderlich, sondern genügt die lokale Einbringung von Energie oder Klebstoff, was ohne ein Eindringen mechanischer Führungselemente wie Nadeln oder dergleichen in das Fasermaterial der Mineralfasermatte schnell und störungsfrei erfolgen kann. Es hat sich überraschend gezeigt, daß eine gegenseitige Lagefixierung von Fasern oder Faserenden im Heftbereich selbst dann zur Bildung eines wirksamen Heftpunktes durchaus ausreicht, wenn über die Dicke der Mineralfasermatte gesehen Fäden nur gruppenweise erfaßt und gegeneinander festgelegt werden, während zwischen benachbarten Gruppen verschweißter oder verklebter Fäden keine unmittelbare körperliche Verbindung zur Lagefixierung besteht. Eine solche Verschweißung oder Verklebung lediglich von Fasergruppen ergibt sogar den Vorteil, daß Wärmebrücken im Bereich der Heftpunkte minimiert sind. Da das Fasermaterial der Mineralfasermatte im Heftbereich in aller Regel verdichtet, also unter gegenseitiger Annäherung der Fasern zusammengedrückt ist, vermindert selbst eine nur gruppenweise gegenseitige

4

0178679

Fixierung dieser zusammengedrückten Lage der Fasern die nachfolgende Auffederung im Bereich des Heftpunktes und ergibt eine ausreichende Heftwirkung. Soweit bei der Bildung des Heftpunktes im Heftbereich eine Druckkraft auf das Fasermaterial ausgeübt wird, beispielsweise beim Einschießen von Stoffstrahlen zur Erzielung einer Verklebung, kann gegebenenfalls sogar auf eine flächige Verdichtung des Fasermaterials im Heftbereich verzichtet werden, da sich dann auch bei unverdichtet vorliegendem Fasermaterial lokal auf den Heftbereich beschränkt eine gewisse Zusammendrückung ergibt, die bei entsprechendem Verfestigungsverhalten des Stoffstrahls ausreichend fixiert werden kann. In jedem Falle erhält die Mineralfasermatte durch die Heftung ein matratzenähnliches Aussehen mit zwischen den Heftpunkten, deren Anordnung und Dichte frei wählbar ist, aufgefedertem Fasermaterial.

Gemäß Anspruch 2 wird zur Verschweißung der Fasern lokal Wärmeenergie in den Heftbereich eingebracht, in einer solchen Menge, daß die im Heftbereich vorliegenden Fasern erweichen, wonach die Lagefixierung der erweichten Fasern in der bei der Verschweißung eingenommenen Relativlage durch nachfolgende Abkühlung bis zur Verfestigung der Fasern erfolgt.

Zur Einbringung der Energie in den Heftbereich stehen verschiedene Möglichkeiten zur Verfügung. Gemäß Anspruch 3 sind elektromagnetische Wellen wie Laserstrahlen bevorzugt. Elektromagnetische Wellen wie Laserstrahlen ergeben größtmögliche Freizügigkeit hinsichtlich Dosierung, Anpassung an die jeweiligen Bedürfnisse usw., stellen also die technisch wohl optimale Lösung dar, sind jedoch mit sehr hohen Anlagekosten behaftet.

Gemäß Anspruch 4 sind hierzu Flammstrahlen aus einem Kohlenwasserstoffeuer oder Heißgasstrahlen bevorzugt, die mit relativ geringem apparativem Aufwand erzeugt werden können. Hinsichtlich einer Verwendung von Heißgasstrahlen ergibt sich der zusätzliche Vorteil, daß die Einbringung der Wärmeenergie in das Heißgas an jeder geeigneten Stelle und in jeder geeigneten Form in räumlichem Abstand zur Mineralfasermatte erfolgen kann.

Sowohl Flammstrahlen als auch Heißgasstrahlen können dadurch schärfer gebündelt oder fokussiert werden, daß gemäß Anspruch 5 an der der Eintrittsseite der Strahlen gegenüberliegenden Flachseite Unterdruck erzeugt wird, der die Flamme oder das Heißgas von ihrem Eintritt an der gegenüberliegenden Flachseite der Mineralfasermatte ausgehend gewissermaßen durch die Mineralfasermatte im Heftbereich hindurchsaugt. Gemäß Anspruch 6 ergibt sich eine besonders gute Fokussierung dann, wenn auch der Unterdruck nur lokal im Heftbereich wirksam ist und so einen beim Durchdringen der Mineralfasermatte im Auffächern begriffenen Strahl erneut bündelt.

Gemäß Anspruch 7 kann die Mineralfasermatte auf der einen und/oder anderen Seite mit einer Kaschierungsbahn versehen sein, sofern diese gasdurchlässig ist und somit die Flammstrahlen oder Heißgasstrahlen am Eintritt in das Fasermaterial und am Austritt aus dem Fasermaterial nicht wesentlich behindert; selbstverständlich muß die Kaschierungsbahn weiterhin aus einem Material bestehen, welches der Wärmeeinwirkung im Heftbereich standhält, wobei jedoch lokale Erweichungen auch des Materials der Kaschierungsbahn nicht ausgeschlossen werden brauchen, sondern im Gegenteil eine Anschweißung benachbarter Fasern an der Kaschierungsbahn und damit eine Mitheftung der Kaschierungsbahn in einem Zuge begünstigen.

Gemäß Anspruch 8 kann eine Verklebung der Fasern miteinander dadurch erfolgen, daß eine mengenmäßig vorbestimmte Charge eines fließfähigen, verfestigbaren Stoffes in fließfähiger Konsistenz als feiner Stoffstrahl von der Flachseite her in die Wollebahn eingeschossen und in seiner nach dem Einschuß eingenommenen Lage verfestigt wird.

Dadurch, daß der zur Bildung eines Heftpunktes dienende Stoff in fließfähiger Konsistenz bereitgestellt wird, braucht einem geeigneten Schußapparat lediglich die abgemessene Menge des Stoffes für jeden Heftpunkt durch eine Leitung vorgelegt zu werden, was bei hoher Geschwindigkeit und relativ geringem apparativem Aufwand bei guter Steuer- oder Regelbarkeit möglich ist. Die so abgemessene Charge wird sodann druckbeaufschlagt und durch eine Düse als feiner Strahl ausgetrieben, der in die Wollebahn eindringt. Dort erfolgt die Verfestigung des eingedrungenen Stoffstrahles und damit eine Heftung der umliegenden Fasern durch Klebewirkung. Auf diese Weise kann etwa an einer das Produktionsband überspannenden Brücke eine geeignete Anzahl von Schußautomaten installiert werden, die beispielsweise ähnlich dem Prinzip von mit Druckzerstäubung, also ohne Preßluft, arbeitenden Farbspritzpistolen aufgebaut sein können, jedoch anstelle der Zerstäuberdüse eine entsprechend größere Düsenöffnung zur Bildung eines kompakten Fluidstrahles erhalten. Es kann somit insoweit auf vorhandene und bewährte Technologie zurückgegriffen werden, die von daher und im Hinblick auf die äußerst geringe Zahl bewegter Teile äußerst störungssicher arbeitet. Die Schußfolge kann sehr hoch eingestellt werden, wobei durch Mehrfachanordnung von Schußautomaten hintereinander eine Steigerung der Arbeitsgeschwindigkeit auch auf ein Mehrfaches der maximal möglichen Schußfolge erzielt werden kann, so daß in der Praxis keinerlei Geschwindigkeitseinschränkungen bestehen.

Eine erfindungsgemäße Mineralfasermatte nach Anspruch 25 zeichnet sich dadurch aus, daß an den Heftpunkten in Richtung der Materialdicke liegende Stifte aus verfestigtem Klebstoff in der Wollebahn angeordnet sind, mit denen benachbarte Faserenden verklebt sind. Dadurch werden die Fasern an den diskreten Heftpunkten lagegesichert und so der Zusammenhalt der Matte gefördert. Bei bindemittelfreier Herstellung der Wollebahn enthält die Matte dann zwar keinerlei Bindemittel, jedoch an diskreten Stellen den Klebstoff. Selbst für Anwendungen, bei denen die in begrenzter Anzahl als Bindemittel verwendbaren Stoffe unbedingt vermieden werden müssen, braucht die Gegenwart des Klebstoffes an den diskreten Heftstellen nicht zu stören, da hinsichtlich der Wahl des Klebstoffes im Rahmen der Erfindung erheblich größere Freiheit besteht und auf einen Klebstoff wie beispielsweise auf der Basis von Wasserglas oder kolloidaler Kieselsäure (Kieselsol) ausgewichen werden kann, dessen Gegenwart anders als die Gegenwart eines als Bindemittel verwendbaren Stoffes wie etwa Phenolharz nicht stört.

Eine erfindungsgemäße Vorrichtung zur Durchführung des Verfahrens unter Verwendung von Flammstrahlen oder Heißgasstrahlen zeichnet sich nach Anspruch 33 dadurch aus, daß an der in Einwirkungsrichtung der Strahlen vorderen Flachseite der Mineralfasermatte eine im wesentlichen gasundurchlässige Eintritts-Abdeckbahn auf der Oberfläche der Mineralfasermatte aufliegt, die an den Stellen der vorgesehenen Heftpunkte je eine Perforationsöffnung aufweist, und daß eine Einrichtung zur Erzeugung einer Flamme oder zur Zufuhr von Heißgas an der freien Außenseite der Eintritts-Abdeckbahn vorgesehen ist. Hierdurch tritt je ein Flammstrahl oder ein Heißgasstrahl an jeder Perforationsöffnung in das Fasermaterial aus und bildet dort einen Heftpunkt aus, während an der freien Außenseite der Eintritts-Abdeckbahn ein allen Perforationsöffnungen gemeinsamer Flammraum oder Heißgasvorlageraum vorgesehen sein kann.

Zur bestmöglichen Fokussierung der austretenden Strahlen ist gemäß Anspruch 34 an der der Eintritts-Abdeckbahn gegenüberliegenden Flachseite der Mineralfasermatte eine im wesentlichen gasundruchlässige Austritts-Abdeckbahn auf der Oberfläche der Mineralfasermatte angeordnet, die an den Stellen der vorgesehenen Heftpunkte je eine Perforationsöffnung aufweist, wobei an der freien Außenseite der Austritts-Abdeckbahn eine Einrichtung zur Erzeugung von Unterdruck vorgesehen ist. Beide Abdeckbahnen laufen synchron mit der Mineralfasermatte derart mit, daß die jeweiligen Perforationsöffnungen zu beiden Seiten der Mineralfasermatte miteinander fluchten und so einen relativ scharf begrenzten Durchtrittsweg der Strahlen durch das Fasermaterial zur Bildung der Heftpunkte erzwingen.

Mit besonderem Vorteil ist gemäß Anspruch 35 die Austritts- und/oder Eintritts-Abdeckbahn als auf der Oberfläche der Mineralfasermatte abrollende Lochwalze ausgebildet, die einen die Perforationsöffnungen aufweisenden Mantel beispielsweise aus Stahlblech aufweisen kann, wobei natürlich für eine entsprechend synchronisierte Drehung der beiden Lochwalzen beim Abrollen auf der Oberfläche der Mineralfasermatte Sorge getragen werden muß.

Die übrigen Unteransprüche haben vorteilhafte Weiterbildungen des erfindungsgemäßen Verfahrens bzw. der erfindungsgemäßen Mineralfasermatte zum Inhalt.

Weitere Einzelheiten, Merkmale und Vorteile der Erfindung ergeben sich aus der nachfolgenden Beschreibung einer Ausführungsform anhand der Zeichnung.

Es zeigt

Fig. 1 bis 4    Teilschnitte durch eine einseitig kaschierte Wollebahn mit schematischer Darstellung der Erzeugung eines Heftpunktes in aufeinanderfolgenden Phasen,

Fig. 5          in einer den Fig. 1 bis 4 entsprechenden Darstellung einen Teilschnitt durch die Wollebahn mit darin eingebrachtem Stift zur Heftung,

Fig. 6          die Einzelheit aus Kreis VI in Fig. 5 in vergrößerter Darstellung und

Fig. 7          eine schematisch vereinfachte perspektivische
                Darstellung einer Vorrichtung zur Durchführung eines mit Flammstrahlen oder Heißgasstrahlen arbeitenden Verfahrens.

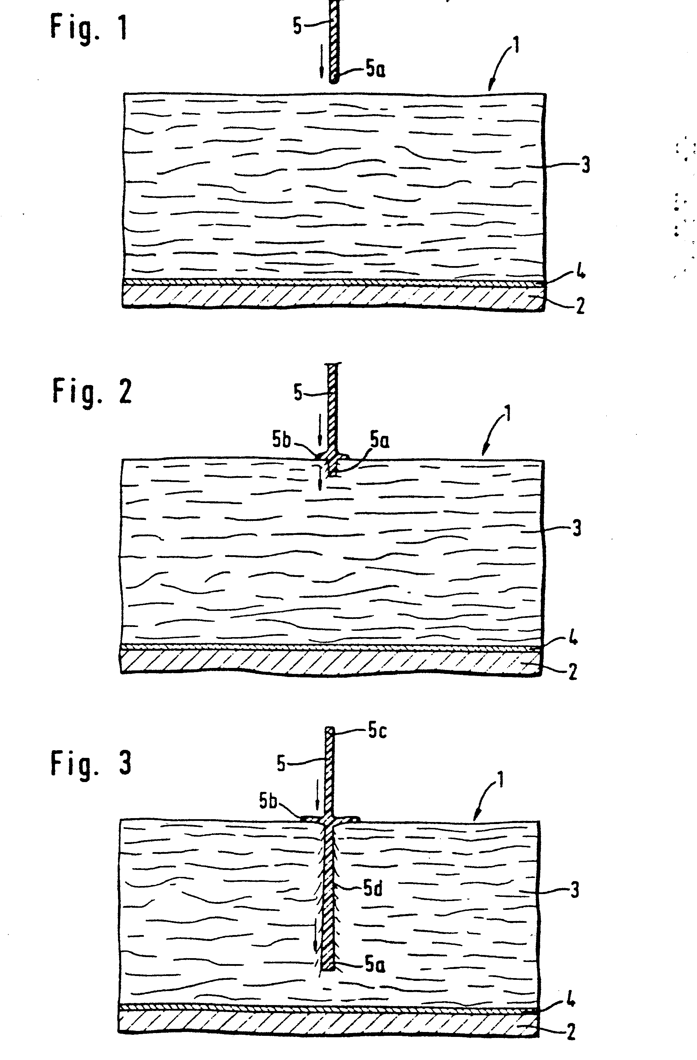

Gemäß Fig. 1 liegt eine Wollebahn 1 auf einer Unterlage 2
auf, die durch das Produktionsband gebildet sein kann,
auf dem die Fasern 3 der Wollebahn 1 aus dem Fallschacht
eines Zerfaserungsaggregats gegebenenfalls ohne jegliches
Bindemittel abgelegt sind. Zwischen die Unterseite der
Wollebahn 1 und die Unterlage 2 ist im Beispielsfalle eine Kaschierungsbahn 4 eingebracht, die beispielsweise als
Folie aus Aluminium oder Kraftpapier ausgebildet sein
kann, wie dies an sich bekannt ist, und etwa als Dampfsperre oder Dampfbremse dienen kann. Die Fasern 3 der
Wollebahn 1 liegen im Falle völliger Bindemittelfreiheit
lose und ungebunden auf der Unterlage 2 beziehungsweise
der Kaschierungsbahn 3 auf, sind jedoch durch eine übliche, nicht näher dargestellte Einrichtung in Form von
Walzen oder Druckflächen auf eine definierte Höhe der
Wollebahn 1 zusammengedrückt und dabei in gewissem Umfange
verdichtet.

In einer nicht näher dargestellten, über der in der Zeichnung oberen Flachseite der Wollebahn 1 angeordneten Schußvorrichtung wird eine mengenmäßig vorbestimmte Charge eines fließfähigen Stoffes unter hohem Druck zwischen etwa
10 und 100 bar gesetzt und über eine Düse mit einem Durchmesser zwischen 0,5 und 2 mm als kompakter feiner Strahl
5 ausgetrieben. In Fig. 1 ist das mit 5a bezeichnete Vorderende des Strahls unmittelbar vor seinem Auftreffen auf
die niedergedrückte Oberfläche der Wollebahn 1 veranschaulicht, wobei sich der Strahl 5 mit hoher Geschwindigkeit
in Richtung des eingezeichneten Pfeiles auf die Wollebahn
1 zubewegt.

Beim Auftreffen auf die Oberfläche der Wollebahn 1 wird in Abhängigkeit von der Dichte der Lage und Art der Fasern 3 Widerstand auf das Vorderende 5a des Strahles 5 ausgeübt, so daß sich im Bereich der Oberfläche der Wollebahn 1 ein ringförmiger Wulst 5b bildet, während das vordere Ende 5a des Strahles 5 weiter in das Innere der Mineralfasern eindringt, wie dies in Fig. 2 ebenfalls durch Pfeile veranschaulicht ist.

Gemäß Fig. 3 ist das Vorderende 5a des Strahles gegebenenfalls unter geringfügiger Verdickung tiefer in die Fasern der Wollebahn 1 eingedrungen, während sich der Wulst 5b durch Ablagerung aus dem Umfangbereich des einschießenden Strahles 5 etwas vergrößert hat. In Fig. 3 ist erstmals das mit 5c bezeichnete Hinterende des Strahls sichtbar, welches sich immer noch mit unveränderter Geschwindigkeit in Richtung auf die Oberfläche der Wollebahn 1 zubewegt. Beim Eindringen des Vorderendes 5a des Strahles 5 verspritzt der fließfähige Stoff in gewissem Umfange an den im Wege des Strahls 5 liegenden Fasern, so daß sich eine rauhe, gegebenenfalls tentakelartige Stoffspritzer 5d aufweisende Oberfläche des Strahls ergibt. Die Umfangsoberfläche des kompakten Strahles 5 wird beim Eindringen in die Fasern 3 der Wollebahn 1 stärker gebremst als der unmittelbar dem Druck des nachdringenden Hinderendes 5c ausgesetzte Innenbereich des Strahles 5, so daß der Umfangsbereich des Stoffes verzögert wird und schließlich zur Ruhe kommt, während der Innenbereich des Stoffes im Strahl 5 noch mit hoher Geschwindigkeit weiter eindringt.

Gemäß Fig. 4 ist das Hinterende 5c des Strahles 5 gemäß dem dort eingezeichneten Pfeil bereits bis unter die Oberfläche der Wollebahn 1 gelangt, und sind zumindest im Bereich der Oberfläche der Wollebahn 1 die umfangsseitigen Bereiche des Stoffes bereits zur Ruhe gekommen, während der Innenbereich des Strahles noch in der Zeichnung nach unten in Bewegung ist. Das Vorderende 5a des Strahles 5 hat die Innenfläche der Kaschierungsbahn 4 erreicht, die als Prallfläche dient und so zur Ausbildung eines verbreiterten Kopfes im Bereich des Vorderendes 5a führt.

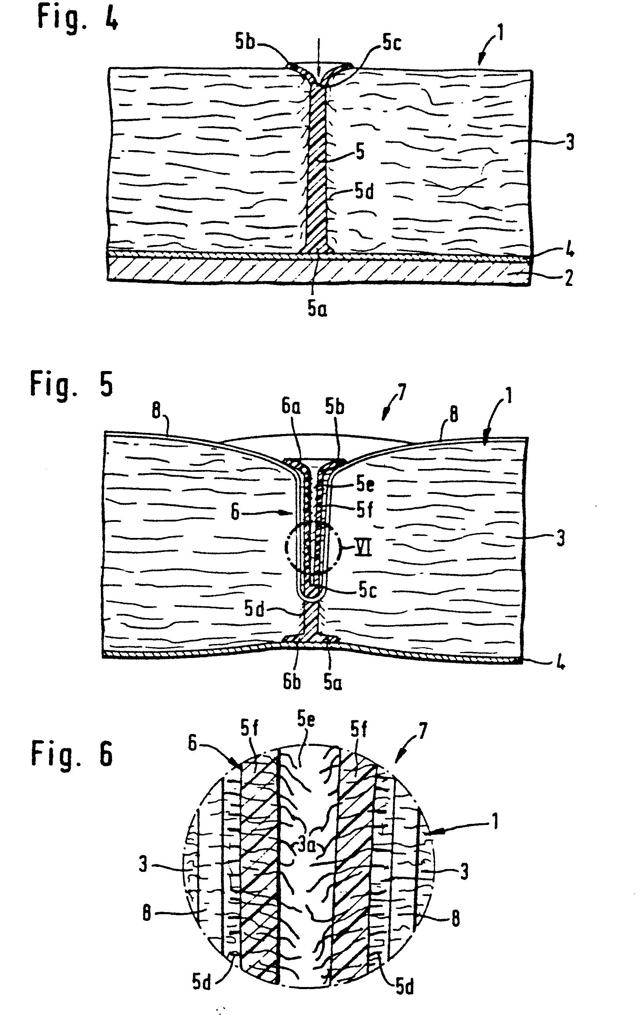

Eine mögliche Ausbildung der fertigen Heftung ist in Fig. 5 veranschaulicht. Das Hinterende 5c des Strahles 5 ist dabei unweit der Innenseite der Kaschierungsbahn 4 und des kopfartig verbreiterten Vorderendes 5a des Strahles 5 zur Ruhe gekommen, und hat an seiner in Strömungsrichtung hinteren Seite einen Kanal 5e gebildet, der von einer im wesentlichen hohlzylindrischen Umfangswand 5f umgeben ist, welche aus gegenüber dem Hinterende 5c vorher zur Ruhe gekommenen Umfangsbereichen des Strahles 5 gebildet ist. In dieser Ruhestellung des Strahles 5 nach seinem Einschuß ist in der weiter unten noch näher erläuterten Weise eine Verfestigung des Stoffes des Strahles 5 erfolgt, so daß ein insgesamt mit 6 bezeichneter Stift mit einem aus dem Wulst 5b gebildeten oberen verbreiterten Kopf 6a und einem vom auftreffenden Vorderende 5a gebildeten unteren verbreiterten Kopf 6b erzeugt worden ist. In Fig. 5 ist die so aus der Wollebahn 1 und der Kaschierungsbahn 4 gebildete, insgesamt mit 7 bezeichnete Mineralfasermatte mit durch die Stifte 6 gebildeten Heftpunkten als fertiges Produkt dargestellt, welches auf der in der Zeichnung unteren Seite durch die Kaschierungsbahn 4 abgedeckt ist, während die Stifte 6 mit ihren verbreiterten Köpfen 6a an der oberen Flachseite der Mineralfasermatte 7 Niederhalter für die Fasern 3 bilden, die im Umgebungsbereich der Stifte 6 nach Druckentlastung in der veranschaulichten Weise auffedern können, so daß sich ein matratzenähnliches Aussehen der Oberseite der Mineralfasermatte 7 ergibt.

Aus der Einzelheit in Fig. 6 ist zu erkennen, daß insbesondere im Zentralbereich des Strahles 5, der im Beispielsfalle als Kanal 5e zurückbleibt, viele der Fasern 3, die im Beispielsfalle eine Dicke von einigen μm, und

eine Länge von etlichen Millimetern haben mögen, unter dem Druck des strömenden Stoffes insbesondere im Bereich des Vorderendes 5a des Strahles 5 gerissen sind und mit diesen gerissenen Faserenden 3a elastisch nach unten abgebogen wurden. Dabei ist die Oberfläche der Faserenden 3a mit dem Stoff benetzt worden, während die im Bereich der Umfangswand 5f liegenden Bereiche der Faserenden voll in den verfestigten Stoff des Stiftes 6 eingebettet sind. An der Außenseite der Umfangswand 5f sind die tentakelartigen Stoffspritzer 5d zu erkennen, die zu einer entsprechenden Benetzung der Fasern 3 im Umfangsbereich des Strahles 5 geführt haben. Auf diese Weise ist eine Vielzahl von horizontal beieinanderliegenden Schichten der Fasern 3 im Schaft des Stiftes 6 verklebt und so in der Relativlage gehalten, die sie bei der Verdichtung im Zuge des Einschusses des Strahles 5 gemäß Fig. 1 bis 4 eingenommen haben.

Zur Erzielung einer Heftwirkung gemäß der Erfindung genügt es somit, eine nicht über die gesamte Dicke der Mineralfasermatte 7 reichende Heftung dadurch zu erzielen, daß eine entsprechend geringere Menge des Stoffes lediglich bis in eine Tiefe etwa gemäß Fig. 3 in die Wollebahn 1 eingeschossen wird und dort zur Ruhe kommt, um Schichten der Fasern 3 der Wollebahn 1 über eine gewisse Höhe in ihrer durch den Preßdruck enger benachbarten Stellung lagezusichern und im Bereich des so gebildeten Stiftes 6 oder Heftpunktes ein vollständiges Rückfedern nach der Druckentlastung zu vermeiden. Sofern keine Kaschierungsbahn 4 verwendet wird, können entsprechende Stifte 6 auch von beiden Flachseiten der Wollebahn 1 her eingeschossen werden, je nach dem Umfang der angestrebten Heftwirkung.

Im Beispielsfalle wird jedoch mit solchem Druck und einer solchen Materialmenge für den Strahl 5 geschossen, daß der Strahl 5 bis auf den Bereich der Unterlage 2 beziehungsweise im Beispielsfalle der Kaschierungsbahn 4 durchdringt und dort aufprallt. Der durch die Prallwirkung erzeugte verbreiterte Kopf 6b des Stiftes 6
hintergreift somit die Fasern 3 der Wollebahn 1 in ihrer
gesamten Dicke an der dem verbreiterten Kopf 6a gegenüberliegenden Seite, so daß sich auch eine nietartige Lagesicherung der Fasern 3 ergibt. Sofern keine Kaschierungsbahn 4 verwendet wird, ist darauf zu achten, daß der
Stoff des Strahles 5 keine unerwünschte Klebewirkung
mit dem Material der Unterlage 2 eingeht, um ein zu starkes Anhaften dort zu verhindern. Sofern mit einer einseitigen Kaschierungsbahn 4 gearbeitet wird, wird als
Stoff für den Strahl 5 vorteilhaft ein Klebstoff verwendet, der mit dem Material der Kaschierungsbahn 4 eine
Klebeverbindung eingeht. Auf diese Weise erfolgt zugleich
durch die Stifte 6 eine Anheftung der Kaschierungsbahn
4 an der entsprechenden Flachseite der Mineralfasermatte
7. Selbstverständlich kann bei Bedarf die Haftung der
Kaschierungsbahn 4 an den Fasern 3 in der üblichen
Weise dadurch weiter verbessert werden, daß die Kaschierungsbahn 4 an ihrer den Fasern 3 zugewandten Innenseite eine
entsprechende Kleberschicht beispielsweise aus Wasserglaskleber trägt und so eine zumindest bereichsweise
flächige Klebeverbindung mit den Fasern 3 der Wollebahn
1 eingeht.

Der Durchmesser des Strahles 5 vor dem Auftreffen auf
die zugewandte Flachseite der Wollebahn 1, also gemäß
Darstellung in Fig. 1, weist bevorzugt einen Durchmesser
zwischen 0,5 und 1 mm entsprechend dem Düsendurchmesser
der Schußvorrichtung auf, wobei die Düse der Schußvorrichtung bei Bedarf an die entsprechende Flachseite
der Wollebahn 1 angelegt oder mit sehr geringem Abstand
davon angeordnet werden kann, um eine Auffächerung
des Strahles durch zu starke Luftreibung zu unterdrücken.
Die Wahl der Dicke des Strahles hängt dabei im wesentlichen von der Art und Kompaktheit der Fasern sowie
der Dicke der Wollebahn 1 im kompaktierten Zustand gemäß
den Fig. 1 bis 4 ab, wobei bevorzugt mit einem möglichst dünnen Strahl mit einem Durchmesser von 0,5 mm oder wenig mehr gearbeitet werden sollte. Auch der Druck, der für den Strahlaustrieb durch die Düse auf die Charge des fließfähigen Stoffes aufgebracht wird, hängt im wesentlichen von denselben geschilderten Parametern wie der Strahldurchmesser ab. Bei relativ lockerem und dünnfaserigem Material der Wollebahn 1 und geringer Dicke kann mit Drücken bereits von 10 bis etwa 30 bar bei geringem Strahldurchmesser gearbeitet werden. Sofern die Durchschlagskraft des Strahles 5 bei stärker kompaktiertem, grobfaserigem oder dickerem Material bei der Wollebahn 1 nicht ausreicht, wird zunächst der Druck bis auf maximal etwa 80 bis 100 bar erhöht, und, wenn dies nicht ausreicht, der Strahldurchmesser bis zur Erzielung der gewünschten Durchschlagskraft beispielsweise auf 1 mm oder auch mehr erhöht.

Die Beherrschung der entsprechenden Drücke für den Strahlaustrieb bereitet keine Probleme, wobei auf die bei Farbspritzpistolen bekannte Technologie einer Druckzerstäubung ohne Preßluft zurückgegriffen werden kann, um bei entsprechenden Durchmessern der Düsenöffnung einen kompakten, luftfreien Strahl 5 zu erhalten.

Beim Durchtrieb des Strahles 5 durch die Fasern 3 der Wollebahn 1 ist in der Regel eine gewisse Verbreiterung des Strahles unvermeidlich, so daß auch ohne Berücksichtigung umfangsseitiger tentakelartiger Stoffspitzer 5d der so gebildete Stift 6 in aller Regel in einem gegenüber dem Durchmesser des Strahles 5 etwas vergrößerten Durchmesser vorliegt, der bei etwa 2 mm Durchmesser des Strahles 5 bis etwa 5 mm liegen kann, wobei der Durchmesser der verbreiterten endseitigen Köpfe 6a und 6b noch erheblich größer sein kann, aber die Köpfe 6a und 6b bei Bedarf auch fast ganz unterdrückt werden können.

Zur Bildung des Stoffes 5 können insbesondere alle diejenigen Materialien herangezogen werden, die als Klebstoffe auf dem vorliegenden Fachgebiet in Frage kommen.
Dabei kann der Stoff des Strahles 5 ein organischer Klebstoff mit thermoplastischem Verhalten wie ein hot-melt-
Kleber sein, der bei Abkühlung verfestigt, oder ein
duroplatischer Kleber wie Kunstharz, etwa Phenolharz,
das bei Wärmezufuhr aushärtet. Andererseits kann für den
Stoff insbesondere dann, wenn etwa im Hinblick auf das
Brandverhalten oder die Betriebstemperatur ein organischer Stoff in der Mineralfasermatter 7 insgesamt unerwünscht ist, auch ein anorganischer Kleber verwendet
werden, insbesondere auf der Basis von Wasserglas oder
kolbidaler Kieselsäure, die beide unter Wärmeeinwirkung
schnell aushärten. Schließlich kann grundsätzlich auch
auf ein Silikonharz zurückgegriffen werden, also einen
Stoff, der im Grenzgebiet zwischen anorganischer und
organischer Chemie liegt, wenn die Besonderheiten des
Einsatzfalles dies zulassen.

Für den Fall, daß die Fasern 3 der Wollebahn 1 bereits
vollständig erkaltet sind, also eine Heftung in zeitlichem Abstand von der Produktion der Fasern 3 erfolgt,
kann es sich als zweckmäßig erweisen, mit einem 2-Komponenten-Kleber oder einem hot-melt-Kleber zu arbeiten,
also solchen Klebern, die zur schnellen Verfestigung
keiner Wärmezufuhr bedürfen. In der Regel wird jedoch
die Heftung im unmittelbaren Anschluß an die Herstellung
der Fasern 3 auf dem Produktionsband als Unterlage 2
durchgeführt,so daß die Wollebahn 1 an der Heftstation
ohnehin noch bei erhöhter Temperatur von beispielsweise
200 °C oder mehr vorliegt, so daß diese Temperatur bei
Verwendung eines bei Erwärmung verfestigenden Klebers
zu dessen Verfestigung genutzt werden kann. Durch Wärmeübergang von den Fasern 3 auf den eindringenden Strahl 5
erfolgt dabei eine Verfestigung bevorzugt im umfangsseitigen Randbereich des Strahles 5 zur Bildung einer
sauberen Umfangswand 5f, was vorteilhaft sein kann. Insbesondere dann, wenn organische Stoffe in der Mineralfasermatte 7 gänzlich vermieden werden sollen, sind dann anorganische Kleber, die bei Erwärmung verfestigen, besonders bevorzugt.

Hierbei kann ein Wasserglaskleber ohne jegliche Füllstoffe mit beispielsweise 30 oder 40% Feststoffgehalt in Form von Natronwasserglas oder Kaliwasserglas als reines Silikat verwendet werden, sofern im Hinblick auf die Art der Fasern 3 der relativ hohe Alkaligehalt des Wasserglases nicht stört.

Unabhängig von der Art der mineralischen Fasern 3 kann in jedem Fall ein Kleber auf der Basis von kolloidaler Kieselsäure (Kieselsol), jedoch mit Zuschlagstoffen verwendet werden. Das Kieselsol wird zusammen mit weiteren anorganischen Füllstoffen in einer Aufschlemmung angesetzt und so im Strahl 5 eingeschossen. Als körnige Zuschlagstoffe kommt etwa gemahlenes Aluminiumoxid, Quarzsand, Mullit, Zirkonoxid usw. in Frage, sowie weiter Tone und Kaolin. Zur Verbesserung der Geschmeidigkeit ist eine Bildung der Zuschlagstoffe aus Kaolin gegebenenfalls mit Aluminiumoxid bevorzugt.

Die Menge des Kieselsol im Stoffgemisch hat eine Untergrenze dort, wo sich eine zu geringe Festigkeit des Stiftes 6 durch zu geringen Bindemittelanteil ergeben würde. Aus diesem Gesichtspunkt darf der Anteil des Kieselsol als Feststoff in der Regel nicht geringer sein als etwa ein Zehntel der damit zu bindenden Füllstoffe, so daß das Kieselsol im Stift 6 jedenfalls mit einem Feststoffantei von 10 Gew.-% oder mehr vorliegt. Eine Erhöhung des Kieselsolanteils ergibt zunächst eine Erhöhung der Festigkeit durch bessere Einbindung der körnigen Füllstoffe sowie weiterhin eine glattere Oberfläche. Eine Obergrenze für den Kieselsolanteil im Material des Stiftes 6 liegt da, wo das Kieselsol dazu neigt, sich in körniger Form zu partikulieren und auf diese Weise brüchig zu werden. Dies wird durch einen ausreichend hohen Füllstoffgehalt des Kieselsols vermieden. Daher darf der Anteil des Kieselsol bezogen auf die Menge der Füllstoffe im Stift 6 in der Regel nur etwa bei 1:1 liegen, so daß also mindestens ebenso viele Gewichtsanteile Füllstoffe wie Trockengewichtsanteile Kieselsol im Stift 6 vorhanden sind.

Die vorstehenden Angaben beziehen sich auf die Gewichtsanteile im verfestigten Stift 6, wobei also die Trockenmasse des Kieselsol berücksichtigt ist. Das wässrige Kieselsol, also die kolloidale Kieselsäure, besitzt jedoch einen Wasseranteil von zwischen 60 und 70 Gew.-%, der gegebenenfalls zusammen mit einer zusätzlichen Wasserzugabe zur Verdünnung dazu dient, durch Einstellung der Viskosität oder allgemein des Fließverhaltens das Bindemittel mit den Füllstoffen zu vermischen und die Ausbildung eines sauberen kompakten Strahles 5 zu ermöglichen. Dies kann unterstützt werden durch eine Zugabe von Netzmitteln, wie dies an sich bekannt ist.

Nachfolgend werden zwei Beispiele für eine solche Masse für den Strahl 5 angegeben:

<u>Beispiel 1</u>

58,8 Gew.-% wässeriges Kieselsol (30% Feststoffanteil)
35,4 Gew.-% gemahlenes Aluminiumoxid
5,9 Gew.-% Kaolin

Nach Herausrechnen des Wasseranteils der kolloidalen Kieselsäure ergibt sich für das Material des Stiftes 6 eine Feststoffverteilung von etwa 30 Gew.-% Kieselsol, 60 Gew.-% gemahlenes Aluminiumoxid und 10 Gew.-% Kaolin.

<u>Beispiel 2</u>

70 Gew.-% wässeriges Kieselsol (30% Feststoffanteil)
20 Gew.-% gemahlenes Aluminiumoxid
10 Gew.-% Kaolin

Nach Herausrechnen des Wasseranteils der kolloidalen Kieselsäure ergibt sich für das Material des Stiftes 6 dabei eine Feststoffverteilung von etwa 41 Gew.-% Kieselsol, 39 Gew.-% gemahlenes Aluminiumoxid und 20 Gew.-% Kaolin.

Anstelle des Kaolin können auch Tone als feinkörnige Zuschlagstoffe zur Verbesserung der Geschmeidigkeit verwendet werden.

Die körnigen Zuschlagstoffe wie das gemahlene Aluminiumoxid dienen im wesentlichen als Dispergierungsmittel für das Kieselsol. Hierzu sind noch geeigneter gemahlene Fasern, beispielsweise Aluminiumsilikatfasern oder Mineralfasern. Sofern dies verfahrenstechnisch keine wesentlichen Schwierigkeiten im Zusammenhang mit der mengenmäßigen Abmessung, chargenmäßigen Zufuhr und dem Austrieb des Stoffes für den Strahl 5 ergibt, können daher anstelle wenigstens eines Teils der körnigen Zuschlagstoffe auch derartige Fasern, beispielsweise gemahlene Aluminiumsilikatfasern zugesetzt werden, wobei die Festigkeit des Materials des Stiftes 6 umso größer wird, je mehr faserige Zuschlagstoffe anstelle der körnigen Zuschlagstoffe verwendet werden können. Grundsätzlich ist jedoch auch zur Vereinfachung der Verfahrensführung ein Zusatz von faserigem Material nicht unbedingt erforderlich, da dessen Funktion auch von den Mineralfasern 3 der Wollebahn 1 übernommen wird, die in großer Zahl in das Material des Strahles 5 eingebettet sind und so, wie in Fig. 6 schematisch veranschaulicht ist, die Funktion eines Faseranteils im Material des Strahles 5 mitübernehmen.

Die zuvor für die Verwendung von kolloidaler Kieselsäure als anorganischer Klebstoff geschilderten Zuschlagstoffe können entsprechend auch einem Klebstoff auf der Basis von Wasserglas zugesetzt werden. Jedoch ist Wasserglas im Hinblick auf dessen Konsistenz bei Bedarf auch ohne jegliche Zuschlagstoffe als reines Silikat zu verwenden.

Von Bedeutung bei der Ausbildung der Stifte 6 ist die
Geschwindigkeit der Verfestigung des in fließfähiger Form
als Strahl 5 eingeschossenen Stoffes. Im Falle einer
Verfestigung des Stoffes durch Wärmezufuhr kann die Verfestigung, wie bereits weiter oben erwähnt, dadurch
wesentlich begünstigt werden, daß im unmittelbaren Anschluß an die Erzeugung der Fasern 3 für die Wollebahn 1
in die noch heißen Fasern eingeschossen wird, so daß
deren Wäremeinhalt für die Verfestigung genutzt werden
kann. Alternativ oder zusätzlich kann eine schnelle und
gezielte Einbringung von Wärme in das Material des
Stiftes 6 etwa durch eine Mikrowellenheizung oder Hochfrequenzheizung erfolgen, die auf Wechselwirkung mit
dem Material des Stiftes 6 ausgelegt ist. Sofern Metall
der Düse der Schutzvorrichtung in unmittelbarer Anlage
an die obere Flachseite der Wollebahn 1 beziehungsweise
den Wulst 5b gebracht wird, kann auch eine elektrische
Spannung zwischen der Düse und der Unterlage 2 beziehungsweise der Kaschierungsbahn 4 angelegt werden, die zu
einem entsprechenden Stromfluß durch den Schaft des
Stiftes 6 führt und so dessen schnelle Erwärmung und
Verfestigung gewährleistet.

Wenn der Stift 6 vor einer Druckentlastung der Wollebahn
1 vollständig durchgehärtet ist, so liegt er in der
in Fig. 5 veranschaulichten kompakten Ausbildung als
stabiler Niet vor. Wenn jedoch nur eine teilweise Verfestigung des Materials des Stiftes 6 erfolgt ist,
bevor die Druckentlastung und Auffederung des Materials
erfolgt, so kann der Auffederungsdruck der Fasern 3,
der zu einer Zugbelastung des Schaftes des Stiftes 6
führt, dazu führen, daß das Material des Schaftes des
Stiftes 6 an einer oder mehreren Stellen reißt und somit
der Stift 6 in einer Mehrzahl von miteinander in Einschußrichtung fluchtenden Teilstücken besteht. Hierdurch
werden die für die Zugfestigkeit des Materials des Stiftes 6 vor der vollständigen Aushärtung zu hohen Zugspannungen infolge der Auffederung der Fasern 3 bis auf
eine Höhe abgebaut, die unterhalb der Zugfestigkeit in
den jeweiligen Teilstücken liegt. Dabei bleiben aber
dennoch Faserschichten im axialen Bereich der jeweiligen
Teilstücke miteinander verklebt und kompaktiert in der
durch die Pressung beim Einschuß erzeugten gegenseitigen
Relativlage. Auch bei einem "Aufgehen" des Stiftes 6
unter Bildung von Teilstücken federt somit das Wollematerial im Bereich des Stiftes 6 nicht ungehindert auf,
sondern nur auf eine begrenzte Höhe, die Spalte zwischen
den gebildeten Teilstücken ergibt. Dies kann für die
gewünschte Heftung unschädlich sein, hingegen unter wärmetechnischen Gesichtspunkten erwünscht sein, da die Spalte
zwischen den Teilstücken jedes Stiftes 6 eine Bildung von
Wärmebrücken durch das Material des Stiftes 6 vermeiden.
Somit kann es im Einzelfall zweckmäßig sein, das Verfahren hinsichtlich der zeitlichen Abstimmung zwischen
vollständiger Aushärtung des Klebstoffes zur Bildung des
Stiftes 6 einerseits und der Druckentlastung der Wollebahn 1 zur Rückfederung andererseits so zu führen, oder
die Festigkeit auch des ausgehärteten Materials des
Stiftes 6 so zu wählen, daß dieser bei Auffederung der
Wollebahn 1 "bricht" und so einen Heftpunkt ohne Wärmebrücke bildet.

Insbesondere bei einer Ausbildung eines derartigen,
nicht kompakt zwischen den beiden Flachseiten der
Mineralfasermatte 7 verlaufenden Stiftes 6, entweder
durch einen die Dicke der Wollebahn 1 nicht vollständig
durchsetzenden Einschuß oder aber durch nachträgliche
Desintegrierung des Schaftes des Stiftes 6 in der geschilderten Weise, kann die mechanische Festigkeit der
Heftung durch zusätzliche Verwendung eines Heftfadens
8 verbessert werden, wie er in den Fig. 5 und 6 beispielhaft eingezeichnet ist. Ähnlich einer Steppnaht
erstreckt sich der Heftfaden 8 von Heftpunkt zu Heftpunkt
und ist dabei durch das Material des Stiftes 6 in der Mineralfasermatte 7 verankert.

Die Einarbeitung eines solchen Heftfadens kann ganz einfach dadurch erfolgen, daß der Heftfaden 8 locker von Einschußstelle zu Einschußstelle gelegt wird und vom einschießenden Strahl mitgerissen und bei dessen Verfestigung mit verklebt wird. Der Durchmesser des Heftfadens 8 sollte dabei geringer sein als der Durchmesser des Strahles 5, andererseits aber so groß wie möglich, um eine stabile Verankerung der oberflächenseitigen Fasern 3 der Mineralfasermatte 7 zu fördern. Eine zu starke Störung des Einschusses durch den Heftfaden 8 wird vermieden, wenn der Durchmesser des Heftfadens 8 bei weniger als 75% des Durchmessers des Strahles 5, zweckmäßig bei etwa der Hälfte des Durchmessers des Strahles 5 liegt. Dabei sollte der Durchmesser des Heftfadens 8 nicht unter 0,1 mm und nicht über 1 mm liegen, sondern bei den angestrebten Durchmessern des Strahles 5 im Bereich zwischen 0,2 und 0,7 mm, insbesondere bei etwa 0,5 mm, wobei sich die angestrebte Relation zum Strahldurchmesser ergibt, wenn mit einem Strahl mit einem Durchmesser in der Größenordnung von 1 mm gearbeitet wird.

Wie die vorstehende Beschreibung zeigt, sind vielfache Abwandlungen und Abänderungen möglich, ohne den Rahmen der Erfindung zu verlassen. So kann beispielsweise zusätzlich zu einem in Längsrichtung der Matte von Einschußstelle zu Einschußstelle verlaufenden Heftfaden 8 jeder Einschußreihe auch eine Anzahl von Querfäden mit verankert werden, so daß sich eine netzartige Fadenstruktur ergibt. Weiterhin können die Heftfäden 8 aus jedem geeigneten Material bestehen, im Falle hoher Anforderungen an die Brandsicherheit beispielsweise auch aus Glasfilamenten. Das Material für die Fasern 3 ist in der Regel Steinwolle oder Glaswolle mit einer Faserlänge von beispielsweise zwischen 5 und 10 mm, es

0178679

22

kann jedoch auch eine deutlich größere Faserlänge von im Durchschnitt 20 oder mehr mm verwendet werden, zumal sich bei größerer Faserlänge der Zusammenhalt der Matte zwischen den Heftpunkten verbessert.

Hingegen sollten für einen Faserzuschlag zu einem Stoff aus Kieselsol oder auch Wasserglas sehr kurze, gemahlene Fasern verwendet werden, die jedoch immer noch eine Länge in der Größenordnung von Zehntelmillimetern oder wenig darunter besitzen, was im Hinblick auf einen üblichen Faserdurchmesser von einigen µm auch bei einer solch kurzen Faserlänge noch einen klar faserigen Charakter mit gegenüber dem Durchmesser um Größenordnungen größerer Länge ergibt. Da die Teilchen des Kieselsol außerordentlich klein sind, gelingt auch mit derartig kurzen, gemahlenen Fasern die Erzielung der gewünschten Dispergierungswirkung auf das Kieselsol, um einen geschmeidigen, elastischen Körper zu bilden. Andererseits sind derartig kurze Fasern relativ gut in der Schußvorrichtung zu verarbeiten und besitzen ein gutes Eindringvermögen zwischen die langen Fasern der Wollebahn 1.

Anstelle der vorstehend erläuterten erfindungsgemäßen gegenseitigen Lagefixierung der Fasern 3 mittels Verklebens durch einen an der Heftstelle zusätzlich eingebrachten Stoff kann auch ein Verschweißen der Fasern 3 im Heftbereich zur Erzielung der Heftwirkung vorgenommen werden. Hierzu wird lokal im Heftbereich Wärmeenergie in kompakter Form und mit einer solchen Energiedichte eingebracht, daß die erfaßten Fasern 3 zumindest erweichen und so im komprimierten Zustand mit ihren Enden verschweißen.

Eine sehr elegante, aber vom apparativen Aufwand her aufwendige Lösung hierzu besteht darin, daß die Mineralfasermatte statt mit Stoffstrahlen 5 im komprimierten Zustand mit elektromagnetischen Strahlen wie Laserstrahlen beschossen wird, die scharf gebündelt auf engem Raum ein kurzzeitiges Erhitzen und damit Erweichen der erfaßten komprimierten Faserenden mit sofort nach Wegnahme der Energiezufuhr wieder erfolgender Verfestigung bewirken, so daß Schweiß- oder Heftpunkte erzielt werden.

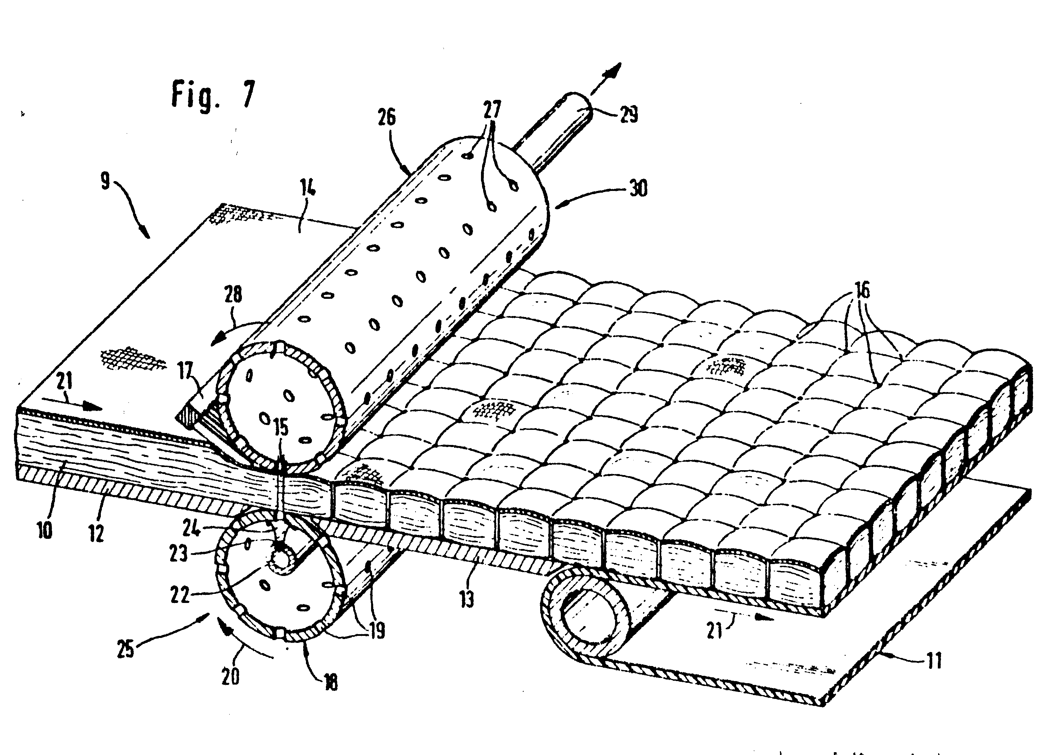

In Fig. 7 ist schematisch vereinfacht ein in perspektivischer Darstellung gehaltener Schnitt durch eine Vorrichtung veranschaulicht, mit der ein derartiges Verschweißen mit Hilfe von Flammstrahlen oder Heißgasstrahlen durchgeführt werden kann.

Eine bindemittelfreie oder bindemittelarme Mineralfasermatte 9 mit einer Wollebahn 10 läuft auf einem Produktionsband 11, von dem in der Zeichnung nur der rechte Bandabschnitt sichtbar ist. Im Bereich der Vorrichtung läuft die Wollebahn 10 vom Produktionsband 11 auf Führungsplatten 12 und 13, und wird anschließend wieder auf das Produktionsband 11 übergeben. Im Beispielsfalle an der Oberseite der Wollebahn 10 ist eine Kaschierungsbahn 14 aus gasdurchlässigem Glasfilamentgewebe angeordnet.

Sinn der Vorrichtung ist es, im Beispielsfalle Heißgasstrahlen 15 in gebündelter Form durch die Wollebahn 10 und die Kaschierungsbahn 14 hindurchzuschießen, um so durch Verschweißen von Faserenden in einem Energiekanal Heftpunkte 16 zu erzeugen.

Hierzu wird die Wollebahn 10 mit der oben liegenden Kaschierungsbahn 14 zunächst einem Niederhalter 17 im Beispielsfalle in Form eines geneigten Rechens zugeführt und dort verdichtet oder zusammengedrückt, so daß die einzelnen Fasern der Wollebahn 10 aneinander angenähert werden. In diesem komprimierten Zustand wird die Wollebahn 10 der Wirkung der diskreten Heißgasstrahlen 15 ausgesetzt und nach sogleich erfolgender erneuter Abkühlung unter die Verfestigungstemperatur der Fasern wieder freigegeben, so daß das Fasermaterial zwischen den Heftpunkten 16 zurückfedert und die fertige, geheftete Bahn ein matratzenähnliches Aussehen erhält, wie dies in Fig. 7 rechts dargestellt ist.

Hierzu ist in einem Spalt zwischen den Führungsplatten
12 und 13 eine Lochwalze 18 derart angeordnet, daß ihr
Mantel die Unterseite der Wollebahn 10 im Spalt zwischen
den Führungsplatten 12 und 13 abstützt und an dieser
Oberfläche der Wollebahn 10 anliegt. Der Mantel der Lochwalze 18 weist Perforationsöffnungen 19 auf, und die
Lochwalze 18 dreht mit einer solchen Geschwindigkeit, daß
ihre Umfangsgeschwindigkeit in Richtung des Pfeiles 20
an ihrem Außenumfang der Bahngeschwindigkeit in Richtung
der Pfeile 21 entspricht. Die Perforationsöffnungen sind
im Beispielsfalle in Axialrichtung und in Umfangsrichtung
der Lochwalze 18 fluchtend und mit gleichen Abständen
angeordnet. Bei Drehung der Lochwalze 18 gelangt somit
nacheinander jede Reihe der Perforationsöffnungen 19 über
ein kurzes Stück in Anlage mit der Unterseite der Wollebahn 10 und hebt sodann wieder von dieser ab.

Im Inneren der Lochwalze 18 ist eine Einrichtung 22 zur
Zufuhr von Heißgas in Form eines Zuführungsrohres mit in
Richtung auf die Wollebahn gerichteten oberen Gasaustrittsöffnungen 23 ortsfest angeordnet. Aus den Gasaustrittsöffnungen 23 tritt an anderer Stelle erzeugtes Heißgas
bei 24 in Richtung auf die Unterseite der Wollebahn 10
aus. Jedesmal, wenn eine Reihe von Perforationsöffnungen
19 der Lochwalze 18 diesen Bereich durchläuft, kann Heißgas durch die Perforationsöffnung 19 aus und in die Wollebahn 10 von der Unterseite eintreten. Bezüglich des Heißgases 24 bildet der Mantel der Lochwalze 18 somit eine
insgesamt mit 25 bezeichnete Abdeckbahn an der Oberfläche
der Wollebahn 10, welche die Wollebahn 10 gegen eine Beaufschlagung durch Heißgas abdeckt, außer an denjenigen
Stellen, an denen Perforationsöffnungen 19 vorgesehen
sind.

An der Oberseite der Wollebahn 10 bzw. der Kaschierungsbahn 14 ist eine im Beispielsfalle völlig gleich ausgebildete Lochwalze 26 vorgesehen, die entsprechende Perforationsöffnungen 27 aufweist und mit der unteren Lochwalze
18 synchron derart dreht, daß die Perforationsöffnungen
27 der oberen Lochwalze 26 mit den Perforationsöffnungen
19 der unteren Lochwalze 18 im Walzenspalt fluchten. Die
obere Lochwalze 26 läuft also gemäß Pfeil 28 gegensinnig
mit der unteren Lochwalze 18 um, jedoch mit gleicher,
der Bahngeschwindigkeit gemäß Pfeil 21 entsprechender Geschwindigkeit.

Die obere Lochwalze 26 weist eine    Einrichtung 29 zur
Erzeugung von Unterdruck im Innenraum der Lochwalze 26
auf, die im Beispielsfalle als Absaugleitung veranschaulicht ist. Auf diese Weise wird im Innenraum der Lochwalze 26 Unterdruck aufrechterhalten. Der Mantel der Lochwalze 26 bildet eine insgesamt mit 30 versehene Austritts-
Abdeckbahn bezüglich der Oberseite der Wollebahn 10, die
hier die Wollebahn 10 vor der Einwirkung des Unterdrucks
überall dort schützt, wo keine Perforationsöffnungen 27
vorgesehen sind.

Somit tritt in der veranschaulichten Stellung, in der gerade eine obere Reihe von Perforationsöffnungen 19 der
Lochwalze 18 mit einer unteren Reihe der Perforationsöffnungen 27 der Lochwalze 26 fluchtet, Heißgas, das aus
den Perforationsöffnungen 23 der Einrichtung 22 gebündelt
nach oben geblasen wird, mit der verbleibenden kinetischen
Energie durch die damit fluchtende Perforationsöffnung 19
der Lochwalze 18 hindurch in das Fasermaterial der Wollebahn 10 hinein, und bildet dort den Heißgasstrahl 15.
Dieser ist an einer Auffächerung in der Wollebahn dadurch
gehindert, daß an der gegenüberliegenden Seite der im Walzenspalt komprimierten Wollebahn 10 eine lokal begrenzte,
fluchtende Absaugung durch die entsprechende Perforationsöffnung 27 der Lochwalze 26 hindurch erfolgt, so daß der
Heißgasstrahl 15 gewissermaßen in die fluchtende Perfora-

tionsöffnung 27 hineingesaugt wird und so gut fokussiert bleibt.

Bei Weiterdrehung der Lochwalzen 18 und 26 gerät die betrachtete Perforationsöffnung 19 der unteren Lochwalze 18 außer Flucht mit der zugeordneten Gasaustrittsöffnung 23 der Einrichtung 22, so daß der Flammenstrahl sogleich zusammenbricht und durch die Perforationsöffnungen 27 der oberen Lochwalze 26 lediglich noch Umgebungsluft angesaugt wird, welche beim Durchströmen des Fasermaterials zu dessen sofortiger Abkühlung unter die Verfestigungstemperatur führt. Damit sind die Fasern im Heftbereich beim Austritt aus dem Walzenspalt verschweißt, während das zwischen den Heftpunkten 16 liegende Fasermaterial zur Bildung der matratzenähnlichen Kontur auffedern kann. Dabei ist unschädlich, wenn keine kompakte Schmelzröhre oder dergleichen an den Heftpunkten 16 gebildet ist, sondern nur eine relativ lockere gruppenweise gegenseitige Verschweißung der Fasern 13, so daß auch die Heftpunkte in gewissem Umfange mit zurückfedern, da hierdurch Wärmebrücken vermindert sind. Auch eine gruppenweise Verschweissung reicht zur Bildung akzentuierter Heftpunkte 16 und zur Erzielung einer ausreichenden Heftwirkung aus.

An der Oberseite des Walzenspaltes trifft der Heißgasstrahl 15 mit bereits etwas verminderter Temperatur auf die Innenseite der Kaschierungsbahn 14, die er infolge von deren Gasdurchlässigkeit problemlos durchtreten kann. Die Temperatur des Heißgasstrahles 15 und das Material der Kaschierungsbahn 14 können jedoch so aufeinander abgestimmt sein, daß auch an der Innenseite der Kaschierungsbahn 14 eine gewisse Erweichung auftritt, so daß die Kaschierungsbahn 14 an den Heftpunkten 16 mit verschweißt und sauber in den Heftpunkten 16 gehalten ist.

Im Beispielsfalle möge der Durchmesser der Perforationsöffnungen 19 etwa 2 mm betragen. Der Durchmesser der Perforationsöffnungen 27 kann gleich, bei Bedarf aber auch etwas größer gewählt werden. Eine geringfügige Auffächerung des Heißgasstrahles 15 ist dabei unschädlich, da die Hauptenergie des Heißgasstrahles 15 in dessen Zentrum konzentriert bleibt, so daß problemlos durch entsprechende Abstimmungen erreicht werden kann, daß nur dort eine massive Erweichung von Fasern auftritt und größere Klumpenbildungen im Umfangsbereich der Heftpunkte 16 vermieden werden. Die Dicke der Wollebahn 10 möge im Beispielsfalle z. B. 25 mm vor Eintritt in den Walzenspalt sein, wo eine Verdichtung auf eine Dicke von 15 mm auftritt. Das Fasermaterial für die Wollebahn 10 möge eine Rohdichte von 40 bis 50 kg/m$^3$ besitzen, wobei die Bandgeschwindigkeit gemäß Pfeil 21 20 bis 30 m/min betragen möge. Bei einer solchen Geschwindigkeit wäre eine Einbringung von Steppnähten längst nicht mehr möglich. Der Unterdruck im Inneren der Lochwalze 26 braucht nicht allzu groß sein, und kann in der Regel unter 100 mm Hg gehalten werden. Die Temperatur des Heißgases an den Gasaustrittsöffnungen 23 sollte im Hinblick auf die sehr kurze Einwirkungszeit relativ hoch, gegebenenfalls sogar höher als 1000°C gehalten werden, um ein sicheres Erweichen der im Kernbereich der Heißgasstrahlen liegenden Mineralfasern, beispielsweise Glasfasern zu gewährleisten. Das Material der Glasfasern oder dergleichen wirkt unter der Einwirkung des Heißgasstrahles 15 wie ein Glaslot und verbackt einzelne Fasern miteinander.

Wie die vorstehende Beschreibung zeigt, sind auch bei Bildung der Heftpunkte 16 durch Verschweißung vielfache Abwandlungen und Abänderungen vom beschriebenen Vorgehen möglich, ohne den Rahmen der Erfindung zu verlassen. So könnte beispielsweise anstelle der Einrichtung 22 zur Zufuhr von Heißgas und Bildung von Heißgasstrahlen 15 der Innenraum der Lochwalze 18 auch als Flammraum genutzt werden, wobei durch entsprechende Leitbleche oder dergleichen dafür gesorgt werden kann, daß die Einwirkung der so gebildeten, über 1000°C heißen Flamme auf den oberen Scheitelbereich der Lochwalze 18 konzentriert wird.

Selbstverständlich kann mit abweichenden Dicken, abweichenden Rohdichten, abweichenden Bandgeschwindigkeiten usw. gearbeitet werden, solange die auf die beschriebene Weise gebildete Heftung eine ausreichende Heftwirkung ergibt.

Grünzweig + Hartmann
und Glasfaser AG
6700 Ludwigshafen

Patentansprüche

1. Verfahren zur Herstellung einer vorzugsweise völlig bindemittelfreien Mineralfasermatte, bei dem die Fasern auf einer Unterlage zur Bildung einer Wollebahn abgelegt und gegebenenfalls verdichtet werden, und der Zusammenhalt der Wollebahn durch eine Vielzahl diskreter Heftpunkte gesichert wird, dadurch gekennzeichnet, daß einzelne Fasern zur Bildung jedes Heftpunktes in ihrer gegenseitigen Lage im Heftbereich durch Verschweißung oder Verklebung miteinander fixiert werden.

2. Verfahren nach Anspruch 1, dadurch gekennzeichnet, daß zur Verschweißung der Fasern miteinander der Heftbereich lokal bis auf eine Erweichungstemperatur der Fasern erwärmt und sodann unter Aufrechterhaltung der eingenommenen Relativlage der einzelnen Fasern wieder abgekühlt wird, bis die erweichten Fasern wieder verfestigt sind.

3. Verfahren nach Anspruch 2, dadurch gekennzeichnet, daß die zur Erweichung der Fasern erforderliche lokale Wärme durch auf die Heftbereiche fokussierte Energiestrahlen in Form elektromagnetischer Wellen wie Laserstrahlen eingebracht wird.

4. Verfahren nach Anspruch 3, dadurch gekennzeichnet, daß die zur Erweichung der Fasern erforderliche lokale Wärme durch auf die Heftbereiche fokussierte Energiestrahlen in Form von Flammstrahlen eines Kohlenwasserstoffeuers oder Heißgasstrahlen eingebracht wird.

5. Verfahren nach Anspruch 4, dadurch gekennzeichnet, daß die Fokussierung der Flammstrahlen und/oder der Heißgasstrahlen durch an der gegenüberliegenden Flachseite der Mineralfasermatte erzeugten Unterdruck unterstützt wird.

6. Verfahren nach Anspruch 5, dadurch gekennzeichnet, daß der Unterdruck im wesentlichen auf den Heftbereich begrenzt wird.

7. Verfahren nach Anspruch 5 oder 6, dadurch gekennzeichnet, daß die Mineralfasermatte auf der Unterdruckseite mit einer gasdurchlässigen Kaschierungsbahn versehen wird, deren Material der Wärmeeinwirkung im Heftbereich standhält.

8. Verfahren nach Anspruch 1, dadurch gekennzeichnet, daß zur Verklebung der Fasern miteinander eine mengenmäßig vorbestimmte Charge eines fließfähigen, verfestigbaren Stoffes in fließfähiger Konsistenz als feiner Stoffstrahl von der Flachseite her in die Wollebahn eingeschossen und in seiner nach dem Einschuß eingenommenen Lage verfestigt wird.

9. Verfahren nach Anspruch 8, dadurch gekennzeichnet, daß der Stoff bis auf eine Unterlage für die Wollebahn durchgeschossen wird.

10. Verfahren nach Anspruch 9, dadurch gekennzeichnet, daß zwischen der Unterlage und der Wollebahn eine Kaschierungsbahn angeordnet wird.

11. Verfahren nach Anspruch 10, dadurch gekennzeichnet, daß als Stoff ein Klebstoff verwendet wird, der mit dem Material der Kaschierungsbahn eine Klebeverbindung eingeht.

12. Verfahren nach einem der Ansprüche 8 bis 11, dadurch gekennzeichnet, daß als Stoff ein organischer Klebstoff mit thermoplastischem Verhalten wie ein hot-melt-Kleber oder mit duroplastischem Verhalten wie Kunstharz, etwa Phenolharz, verwendet wird.

13. Verfahren nach einem der Ansprüche 8 bis 11, dadurch gekennzeichnet, daß als Stoff ein Silikonharz verwendet wird.

14. Verfahren nach einem der Ansprüche 8 bis 11, dadurch gekennzeichnet, daß als Stoff ein anorganischer Kleber insbesondere auf der Basis von Wasserglas oder kolloidaler Kieselsäure verwendet wird.

15. Verfahren nach einem der Ansprüche 11 bis 14, dadurch gekennzeichnet, daß ein 2-Komponenten-Kleber verwendet wird.

16. Verfahren nach einem der Ansprüche 11 bis 14, dadurch gekennzeichnet, daß ein bei Erwärmung verfestigender Kleber verwendet wird.

17. Verfahren nach Anspruch 16, dadurch gekennzeichnet, daß die Wollebahn bei der Heftung auf einer erhöhten Temperatur von vorzugsweise $200^{\circ}$C oder mehr gehalten wird.

18. Verfahren nach Anspruch 16 oder 17, dadurch gekennzeichnet, daß der eingeschossene Stoff durch eine Mikrowellenheizung oder Hochfrequenzheizung erwärmt wird.

19. Verfahren nach einem der Ansprüche 16 bis 18, dadurch gekennzeichnet, daß an den einschießenden bzw. eingeschossenen Strahl eine elektrische Spannung zur Erzeugung eines Stromflusses durch den Stoff angelegt wird.

20. Verfahren nach einem der Ansprüche 8 bis 19, dadurch gekennzeichnet, daß der Strahl mit einem Durchmesser von 0,5 bis 2 mm, vorzugsweise zwischen 0,5 und 1 mm erzeugt wird.

21. Verfahren nach einem der Ansprüche 8 bis 20, dadurch gekennzeichnet, daß der fließfähige Stoff für den Schuß mit einem Druck zwischen 10 und 100 bar, vorzugsweise zwischen 30 und 80 bar beaufschlagt wird.

22. Verfahren nach einem der Ansprüche 8 bis 21, dadurch gekennzeichnet, daß an der Einschußstelle des Strahls ein im wesentlichen spannungsfrei von Einschußstelle zu Einschußstelle verlaufender Heftfaden so positioniert wird, daß er vom Strahl erfaßt und verankert wird.

23. Verfahren nach Anspruch 22, dadurch gekennzeichnet, daß ein Heftfaden mit einem Durchmesser von weniger als 75 %, vorzugsweise von ca. 50 % des Durchmessers des Strahles verwendet wird.

24. Verfahren nach Anspruch 22 oder 23, dadurch gekennzeichnet, daß ein Heftfaden mit einem Durchmesser von etwa 0,1 bis 1 mm, vorzugsweise von etwa 0,2 bis 0,7 mm, insbesondere von etwa 0,5 mm verwendet wird.

25. Mineralfasermatte (7) aus vorzugsweise völlig bindemittelfreien Fasern (2), bei der der Zusammenhalt der Fasern (3) durch eine Vielzahl diskreter Heftpunkte gesichert ist, dadurch gekennzeichnet, daß jeder Heftpunkt durch einen in den Fasern (3) angeordneten, in Richtung der Mattendicke liegenden Stift (6) aus verfestigtem Klebstoff gebildet ist, mit dem benachbarte Faserenden (3a) verklebt sind.

26. Mineralfasermatte (7) nach Anspruch 25, dadurch gekennzeichnet, daß die Stifte (6) die Mineralfaser-

0178679

matte (7) vollständig durchsetzen.

27. Mineralfasermatte (7) nach Anspruch 25 oder 26, dadurch gekennzeichnet, daß die Stifte (6) an wenigstens einem ihrer Enden einen verbreiterten Kopf (6a, 6b) aufweisen.

28. Mineralfasermatte (7) nach Anspruch 26 oder 27, mit einer einseitig angeordneten Kaschierungsbahn (4), dadurch gekennzeichnet, daß die Stifte (6) bis zur Kaschierungsbahn ,(4) reichen und mit dieser verklebt sind.

29. Mineralfasermatte (7) nach einem der Ansprüche 25 bis 28, dadurch gekennzeichnet, daß die Stifte (6) einen Kerndurchmesser von 0,5 bis 5 mm, vorzugsweise von 0,5 bis 2 mm, insbesondere von 0,5 bis 1 mm aufweisen.

30. Mineralfasermatte (7) nach einem der Ansprüche 25 bis 29, dadurch gekennzeichnet, daß an der Flachseite der Mineralfasermatte (7) ein Heftfaden (8) zwischen benachbarten Stiften (6) geführt und in den Stiften (6) verklebt ist.

31. Mineralfasermatte (7) nach Anspruch 30, dadurch gekennzeichnet, daß der Heftfaden (8) einen Durchmesser von etwa 0,1 bis 1 mm, vorzugsweise von etwa 0,2 bis 0,7 mm, insbesondere von etwa 0,5 mm aufweist.

32. Mineralfasermatte (7) nach einem der Ansprüche 25 bis 31, dadurch gekennzeichnet, daß der Stift (6) aus einer Mehrzahl von miteinander fluchtenden, voneinander getrennten Teilstücken besteht.

33. Vorrichtung zur Durchführung des Verfahrens nach einem der Ansprüche 3 bis 7, dadurch gekennzeichnet, daß an der in Einwirkungsrichtung des Strahles (15) vorderen Flachseite der Mineralfasermatte (9) eine im wesentlichen gasdurchlässige Eintritts-Abdeckbahn (25) auf der Oberfläche der Mineralfasermatte (9) aufliegt, die an den Stellen der vorgesehenen Heftpunkte (16) je eine Perforationsöffnung (19) aufweist, und daß eine Einrichtung (22) zur Zufuhr von Heißgas oder zur Erzeugung einer Flamme an der der Mineralfasermatte (9) gegenüberliegenden Seite der Eintritts-Abdeckbahn (25) angeordnet ist.

34. Vorrichtung nach Anspruch 33, dadurch gekennzeichnet, daß an der der Eintritts-Abdeckbahn (25) gegenüberliegenden Flachseite der Mineralfasermatte (9) eine Austritts-Abdeckbahn (30) auf der Oberfläche der Mineralfasermatte (9) aufliegt, die an den Stellen der vorgesehenen Heftpunkte (16) je eine Perforationsöffnung (27) aufweist, und daß eine Einrichtung (29) zur Erzeugung von Unterdruck an der der Mineralfasermatte (9) gegenüberliegenden Seite der Austritts-Abdeckbahn (30) angeordnet ist.

35. Vorrichtung nach Anspruch 33 oder 34, dadurch gekennzeichnet, daß die Abdeckbahn (25 bzw. 30) als auf der Oberfläche der Mineralfasermatte (9) abrollende Lochwalze (18 bzw. 26) ausgebildet ist.

Fig. 1

Fig. 2

Fig. 3

Fig. 4

Fig. 5

Fig. 6

Fig. 7

0178679